Europäisches Patentamt

European Patent Office

Office européen des brevets

(11) Veröffentlichungsnummer: **0 187 890**
**B1**

(12) **EUROPÄISCHE PATENTSCHRIFT**

(45) Veröffentlichungstag der Patentschrift: **22.11.90**

(51) Int. Cl.⁵: **F 16 J 15/32**

(21) Anmeldenummer: **85107715.6**

(22) Anmeldetag: **21.06.85**

(54) Radialwellendichtring.

(30) Priorität: **15.01.85 DE 3501065**

(43) Veröffentlichungstag der Anmeldung:
**23.07.86 Patentblatt 86/30**

(45) Bekanntmachung des Hinweises auf die
Patenterteilung:
**22.11.90 Patentblatt 90/47**

(84) Benannte Vertragsstaaten:
**AT BE DE FR GB IT NL SE**

(56) Entgegenhaltungen:
**DE-A-3 221 526**
**DE-A-3 329 386**
**GB-A-1 547 346**
**GB-A-2 141 797**
**GB-A-2 153 020**

(73) Patentinhaber: **Firma Carl Freudenberg**
**Höhnerweg 2-4**
**D-6940 Weinheim/Bergstrasse (DE)**

(72) Erfinder: **Fuchs, Dieter**
**Asternweg 8**
**D-6086 Riedstadt (DE)**
Erfinder: **Schmitt, Wolfgang**
**Alexanderstrasse 53**
**D-6806 Viernheim (DE)**

Courier Press, Leamington Spa, England.

**Beschreibung**

Die Erfindung betrifft einen Radialwellendichtring, umfassend einen Versteifungsring und ein aus einer ebenen Scheibe mit planparallelen Oberflächen erzeugtes Dichtelement aus einem nichtelastomeren Kunststoff, vorzugsweise aus PTFE, das im Bereich seines Innenumfanges unter Bildung eines zylindrischen Endabschnittes kalt in Richtung des abgedichteten Raumes vorgewölbt ist und unter Vorspannung an der Welle anliegt.

Auf einen Radialwellendichtring der vorgenannten Art nimmt die DE—A—25 53 290 bezug. Dieser enthält ein aus einer ebenen Scheibe erzeugtes Dichtelement, das in dem die abzudichtende Welle berührenden Bereich mit reliefartig vorspringenden Rückförderrippen für Leckflüssigkeit versehen ist. Die Erzielung eines guten Abdichtungsergebnisses ist aus diesem Grunde davon abhängig, daß die Welle mit der richtigen Geschwindigkeit umläuft. Ist die Umlaufgeschwindigkeit der Welle zu hoch, dann hat dies eine Verstärkung der Förderwirkung der Rippen zur Folge, und es kann neben einer Mangelschmierung im Bereich der dynamischen Abdichtungszone zur Förderung von Staub aus der Umgebung in die dynamische Abdichtungszone und ggf. in den abgedichteten Raum kommen. Beides ist unerwünscht und kann einen vorzeitigen Ausfall der Dichtung zur Folge haben.

Bei nachlassender Umlaufgeschwindigkeit läßt auch die durch die Rippen verursachte Förderwirkung in Richtung des abgedichteten Raumes nach. Unterhalb einer bestimmten Grenzgeschwindigkeit kann dadurch abgedichtetes Medium, insbesondere im Bereich der Zwischenräume der einzelnen Rippen, die dynamische Abdichtungszone in Richtung der Außenseite passieren und hier zu Verschmutzungen führen. Insbesondere bei Wellenstillstand und in Fällen, in denen sich in dem abgedichteten Raum ein Druck aufbauen kann, ist dieser Effekt deutlich zu beobachten und unerwünscht.

Aus GB—A—2 141 797 ist ein druckbeaufschlagter Radialwellendichtring bekannt, der für einen Kompressor eines Klimageräts bestimmt ist. Der Radialwellendichtring wird nach bestimmten Bemessungsregeln dimensioniert, die auf Seite 2 in den Zeilen 45 bis 60 dieses Dokuments angegeben sind. Diese Bemessungsangaben liegen außerhalb jener Bereiche, die nach der Erfindung gemäß dem Patentanspruch 1 wesentlich sind. Auch enthält dieses Dokument keinen Anwendungshinweis im Hinblick auf die Gestaltung von Radialwellendichtringen bei Kühlwasserpumpen von Kraftfahrzeugen.

Aus GB—A—2 153 020 ist ein Radialwellendichtring bekannt, bei dem die Dichtlippe im vorstehenden Bereich so gestaltet ist, daß der an der abzudichtenden Welle anhaftende Flüssigkeitsfilm in Längsrichtung aufgetrennt wird, um übershüssiges Flüssigkeitsvolumen abzuführen und eine ausreichende Schmierung der dynamischen Abdichtungszone zu gewährleisten. Hierbei ist die Dichtlippe im bestimmungsgemäßen Gebrauchszustand nicht vollständig überflutet, während bei einer Dichtung für Kühlwasserpumpen von Kraftfahrzeugen dies notwendigerweise der Fall ist. Diesem Dokument läßt sich weder ein Hinweis auf entsprechende Bemessungsangaben, noch auf eine Druckbeaufschlagung der Dichtlippe entnehmen.

Aus dem Dokument "Pumping Manual, 6th Edition, Trade & Technical Press, Ltd., 1979" ist eine Radialwellendichtung mit einer Dichtlippe aus spezifisch modifiziertem PTFE bekannt, welche beständig gegen heiße und aggressive Medien ist und eine Abdichtung bei Drücken bis zu 25 Pa gestattet. Auch diesem Dokument lassen sich keine Hinweise für den Einsatz bei einer Kühlwasserpumpe eines Kraftfahrzeugs entnehmen, und es sind auch keine speziellen Abmessungen dort angegeben.

Der Erfindung liegt die Aufgabe zugrunde, einen Radialwellendichtring der eingangs genannten Art derart weiterzuentwickeln, daß das Auftreten der genannten Nachteile sicher vermieden wird. Der vorgeschlagene Radialwellendichtring soll unabhängig davon, ob sich die abgedichtete Welle im Stillstand befindet oder eine Drehbewegung ausführt stets ein gutes Abdichtungsergebnis gewährleisten und zusätzlich die Abdichtung höherer Drücke insbesondere bei Kühlwasserpumpen von Kraftfahrzeugen erlauben.

Nach der Erfindung zeichnet sich hierzu ein Radialwellendichtring der eingangs genannten Art dadurch aus, daß in bezug auf eine Verwendung als Kühlwasserpumpe in einem Kraftfahrzeug die Scheibe bei einer Dicke von 1,4—1,7 mm einen Innendurchmesser aufweist, der gegenüber dem Durchmesser der Welle etwa um den 1,5 bis 3-fachen Wert ihrer Dicke vermindert ist, wobei der Abstand des Versteifungsringes von der Welle an der Einspannstelle der Scheibe 1,2 bis 1,7 mal so groß ist wie die Dicke der Scheibe und wobei die Einspannstelle diejenige Stelle definiert, an der die Scheibe am weiterten radial innen axial von beiden Seiten vom Versteifungsring abgestützt ist.

Das Dichtelement des erfindungsgemäßen Radialwellendichtringes ist gegenüber der Ausführung nach dem eingangs beschriebenen Stand der Technik wesentlich kleiner und kompakter dimensioniert, was indessen vollkommen ausreichend ist in Hinblick auf die im normalen Maschinenbau auftretenden radialen Verlagerungen der abzudichtenden Welle. Insbesondere Wellen mit Durchmessern im Bereich von 5—40 mm lassen sich unter Verwendung dieses Radialwellendichtringes ausgezeichnet abdichten.

Die axiale Erstreckung der dynamisch abgedichteten Zone ist hierdurch außerordentlich kurz bemessen, was die Gewährleistung der erforderlichen Schmierung durch das abzudichtende Medium in diesem kritischen Bereich begünstigt. Von großer Bedeutung ist diesbezüglich auch die Verwendung von nichtelastomeren Kunststoff für die Herstellung des Dichtelementes, insbesondere von PTFE.

Die Scheibe kann zur Erleichterung des Einbaues vorausgehend im Bereich ihres Innenumfanges kegelig in Richtung des abgedichteten Raumes vorgewölbt werden, beispielsweise unter Zuhilfenahme eines Formwerkzeuges. Dabei ist es jedoch von entscheidender Bedeutung, daß eine Erwärmung des Materials bei diesem Formungsvorgangs vermieden wird, um das Rückformungsbestreben des zur Anwendung gelangenden Werkstoffes nicht zu beeinträchtigen. Eine über lange Zeiträume gleichmäßige Anpressung des zylindrischen Endabschnittes der Scheibe an die Oberfläche der abgedichteten Welle wird hierdurch sichergestellt. Sie unterliegt auch während des normalen Betriebes keiner Beeinträchtigung insofern, als die geringe axiale Ausdehnung der dynamischen Abdichtungszone sowie deren gute Schmierung eine stärkere Erwärmung von vornherein auschließen.

Die Scheibe weist im Bereich ihres zylindrisch verformten Endabschnittes keinerlei der Oberfläche der abgedichteten Welle zugewandte, hydrodynamisch wirkende Rückförderelemente auf. Eine gute Wirksamkeit ist dadurch vollkommen unabhängig davon gewährleistet, ob sich die abgedichtete Welle im Stillstand befindet oder eine Drehbewegung ausführt. Auch wechselnde Drehrichtungen, wechselnde Umlaufgeschwindigkeiten und höhere Drücke werden ohne weiteres verkraftet. Der vorgeschlagene Radialwellendichtring eignet sich dadurch ausgezeichnet für die Abdichtung der Kühlwasserpumpe eines Kraftfahrzeuges.

Das gezeigte Ausführungsbeispiel betrifft eine Dichtung zur Verwendung in der Kühlwasserpumpe eines Kfz-Motors. Diese besteht aus dem Versteifungsring 2 und der Scheibe 1 Ersterer ist aus einem glasfasergefüllten Phenolharz erzeugt und unmittelbar an den Außenumfang der Scheibe 1 angeformt. Die Scheibe ist dadurch unlösbar und flüssigkeitsdicht in dem Versteifungsring festgelegt. Sie schließt im Bereich der Festlegungszone mit der Dichtungsachse einen rechten Winkel ein.

Im Bereich des Innendurchmessers ist die aus PTFE bestehende Scheibe in Richtung des abgedichteten Raumes vorgewölbt und liegt mit einem zylindrisch verlaufenden Endabschnitt flächig an der Oberfläche der abgedichteten Welle an.

Die zur Anwendung gelangende Scheibe hat bei einem Wellendurchmesser von 16 mm einen Außendurchmessser von 25,0 mm, einen Innendurchmesser von 13 mm und eine Dicke von 1,5 mm. Die axiale Erstreckung der sich nach dem Einbau ergebenden Anlagefläche zwischen der Scheibe und der Oberfläche der abgedichteten Welle beträgt etwa 2 mm und ist insofern außerordentlich kurz bemessen. Der Radialwellendichtring läßt sich kostengünstig herstellen und leicht einbauen. Er gewährleistet bei einer Verwendung in der Kühlwasserpumpe eines Kraftfahrzeuges ein ausgezeichnetes Abdichtungsergebnis während deren gesamter Lebensdauer. Nachteilig Einwirkungen der üblichen Frostschutzzusätze des zur Anwendung gelangenden Kühlwassers wurden nicht beobachtet.

Nach einer vorteilhaften Ausgestaltung ist es vorgesehen, daß die Scheibe und die Dichtungsachse in dem von dem Versteifungsring umschlossenen Bereich etwa einen rechten Winkel einschließen. Andere gegenseitige Zuordnungen sind ohne weiteres möglich, jedoch werden bei einer rechtwinkeligen Zuordnung eine besonders gute Dauerhaltbarkeit und ein gutes Abdichtungsergebnis erzielt.

Der Versteifungsring kann auf der von dem abgedichteten Medium abgewandten Seite der Scheibe einen Ringsvorsprung aufweisen, der bis in die unmittlebare Nähe der Welle verlängert ist. Die axiale Abstützung des die dynamische Abdichtung bewirkenden Endabschnittes wird hierdurch verbessert, wobei sich als Nebeneffekt der Vorteil ergibt, daß eine Beaufschlagung der dynamischen Abdichtungszone mit von außen zugeführtem Staub und Schmutz erschwert wird.

In Hinblick auf eine kostengünstige Erzeugung hat es sich als vorteilhaft erwiesen, wenn der Versteifungsring aus Kunststoff besteht, und unmittelbar im Bereich des Außenumfanges an die Scheibe angespritzt ist. Duroplastische Werkstoffe wurden bevorzugt. Probleme hinsichtlich der gegenseitigen Festlegung und Abdichtung beider Teile lassen sich hierdurch zuverlässig unterbinden.

Eine beispielhafte Ausführung des erfindungsgemäß vorgeschlagenen Radialwellendichtringes ist in der in der Anlage beigefügten Zeichnung in halbgeschnittener Darstellung wiedergegeben. Sie wird nachfolgend näher erläutert:

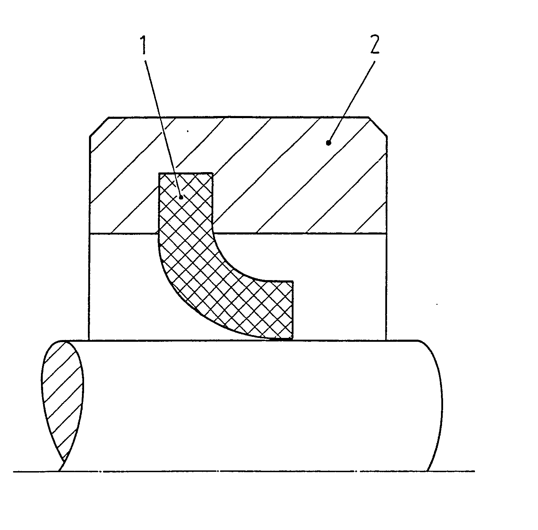

**Patentansprüche**

1. Radialwellendichtring, umfassend einen Versteifungsring (2) und ein aus einer ebenen Scheibe (1) mit planparallelen Oberflächen erzeugtes Dichtelement aus einem nicht elastomeren Kunststoff, vorzugsweise aus PTFE, das im Bereich seines Innenumfanges unter Bildung eines zylindrischen Endabschnittes kalt in Richtung des abgedichteten Raumes vorgewölbt ist und unter Vorspannung an der Welle anliegt, dadurch gekennzeichnet, daß in Bezug auf eine Verwendung als Kühlwasserpumpe in einem Kraftfahrzeug die Scheibe (1) bei einer Dicke von 1,4—1,7 mm einen Innendurchmesser aufweist, der gegenüber dem Druchmesser der Welle etwa um den 1,5—3-fachen Wert ihrer Dicke vermindert ist, wobei der Abstand des Versteifungsringes (2) von der Welle an der Einspannstelle der Scheibe 1,2—1,7 mal so groß ist wie die Dicke der Scheibe (1) und wobei die Einspannstelle diejenige Stelle definiert, an der die Scheibe (1) am weitesten radial innen axial von beiden Seiten vom Versteifungsring (2) abgestützt ist.

2. Radialwellendichtring nach Anspruch 1, dadurch gekennzeichnet, daß die Scheibe (1) und die Dichtungsachse in dem von dem Versteifungsring (2) umschlossenen Bereich einen rechten Winkel einschließen.

3. Radialwellendichtring nach Anspruch 1, dadurch gekennzeichnet, daß die Versteifungsring (2) auf der von der Vorwölbung der Scheibe (1) abgewandten Seite einen nach innen weisenden Ringvorsprung aufweiset, der bis in die unmittelbare Nähe der Welle verlängert ist.

4. Radialwellendichtring nach Anspruch 1 bis 2, dadurch gekennzeichnet, daß der Versteifungsring (2) aus Kunststoff besteht.

## Revendications

1. Bague d'étanchéité radiale pour arbre comprenant une bague de renfort (2) et un élément d'étanchéité fabriqué dans un disque plan (1) à surfaces à plans parallèles en matériau qui n'est pas un élastomère mais est de préférence du PTFE, qui est pré-cintré à froid en direction de l'enceinte à rendre étanche dans la zone de sa périphérie intérieure en formant une section terminale cylindrique et qui prend appui sur l'arbre avec précontrainte, caractérisée en ce que, dans le cas d'utilisation pour une pompe à eau de refroidissement d'un véhicule automobile, le disque (1) présente, pour une épaisseur de 1,4—1,7 mm un diamètre intérieur qui est diminué de 1,5 à 3 fois son épaisseur par rapport au diamètre de l'arbre, que la distance de la bague de renfort (2) par rapport à l'arbre est, au point de serrage du disque 1,1—1,7 fois plus grande que l'épaisseur du disque (1) et que le point de serrage définit l'endroit où le disque (1) est supporté le plus loin radialement, axialement vers l'intérieur, par les deux côtés de la bague de renfort (2).

2. Bague d'étanchéité radiale pour arbre selon la revendication 1, caractérisée en ce que le disque (1) et l'axe d'étanchéité forment un angle droit dans la zone entourée par la bague de renfort (2).

3. Bague d'étanchéité radiale pour arbre selon la revendication 1, caractérisée en ce que la bague de renfort (2) présente, sur le côté opposé au pré-cintrage du disque (1), une saillie annulaire tournée vers l'intérieur qui est prolongée jusqu'à proximité immédiate de l'arbre.

4. Bague d'étanchéité radiale pour arbre selon la revendications 1 et 2, caractérisée en ce que la bague de renfort (2) est réalisée en matière plastique.

## Claims

1. A radial shaft seal comprising a reinforcing ring (2) and a sealing element produced from a flat disk (1) with flat parallel surfaces and made of a non-elastomeric plastic, preferably of PTFE, which disk, in the cold state in the region of its inside circumference, curves towards the sealed-off space with formation of a cylindrical end section and bears against the shaft under prestress, characterized in that, in respect of use as a cooling water pump in a motor vehichle, the disk (1) having a thickness of 1.4—1.7 mm has an inside diameter which, in relation to the diameter of the shaft, is reduced by approximately 1.5—3 times the value of its thickness, the spacing between the reinforcing ring (2) and the shaft at the clamping point of the disk being 1.2—1.7 times greater than the thickness of the disk (1), and the clamping point defining the furthest radially inside point at which the disk (1) is supported axially on both sides by the reinforcing ring (2).

2. A radial shaft seal according to Claim 1, characterized in that the disk (1) and the sealing axis enclose a right angle in the region surrounded by the reinforcing ring (2).

3. A radial shaft seal according to Claim 1, characterized in that, on the side facing away from the protruding curvature of the disk (1), the reinforcing ring (2) has an annular projection pointing inwards which is extended into the immediate vicinity of the shaft.

4. A radial shaft seal according to any of Claims 1 to 2, characterized in that the reinforcing ring (2) is composed of plastic.